# EUROPÄISCHE PATENTSCHRIFT

(11) **EP 3 034 985 B1**
(45) Veröffentlichungstag und Bekanntmachung des Hinweises auf die Patenterteilung: **06.05.2020**
(21) Anmeldenummer: 15003427.0
(22) Anmeldetag: 02.12.2015
(51) Int. Cl.: F41G 3/08, F41H 13/00, F41G 3/14, G01S 17/89, G01S 17/95

(54) **VERFAHREN UND VORRICHTUNG ZUR LOKALEN STABILISIERUNG EINES STRAHLUNGSFLECKS AUF EINEM ENTFERNTEN ZIELOBJEKT**
METHOD AND DEVICE FOR LOCALLY STABILIZING A RADIATION SPOT ON A REMOTE TARGET OBJECT
PROCEDE ET DISPOSITIF DE STABILISATION LOCALE D'UNE TACHE DE RAYONNEMENT SUR UN OBJET CIBLE ELOIGNE

(30) Priorität: 19.12.2014 DE 102014018803; 08.08.2015 DE 102015010275
(43) Veröffentlichungstag der Anmeldung: 22.06.2016
(73) Patentinhaber: MBDA Deutschland GmbH, 86529 Schrobenhausen (DE)
(72) Erfinder: KEFFERPUETZ, Klaus, D-85298 Scheyern (DE); KALENDER, Carolyn, D-85254 Sulzemoos (DE); ZOZ, Jürgen, D- 86316 Friedberg (DE)
(74) Vertreter: Isarpatent

(56) Entgegenhaltungen:
- US-A1- 2009 097 508
- US-A1- 2010 282 942
- US-A1- 2011 103 410
- US-A1- 2012 292 481
- US-B1- 7 405 834
- FITZPATRICK B ET AL: "Bayesian statistical approaches to tracking through turbulence", AMERICAN CONTROL CONFERENCE, 2004. PROCEEDINGS OF THE 2004 BOSTON, MA, USA JUNE 30-JULY 2, 2004, PISCATAWAY, NJ, USA,IEEE, 30. Juni 2004 (2004-06-30), Seite 1499, XP031989674, ISBN: 978-0-7803-8335-7

## Beschreibung

### TECHNISCHES GEBIET

Die vorliegende Erfindung betrifft ein Verfahren zur lokalen Stabilisierung eines Strahlungsflecks auf einem entfernten Zielobjekt. Sie betrifft weiterhin eine Vorrichtung zur lokalen Stabilisierung eines Strahlungsflecks auf einem entfernten Zielobjekt gemäß einem solchen Verfahren. Dabei wird ein Hochenergielaserstrahl von einem Hochenergiestrahler ausgesendet und auf das entfernt gelegene oder sich in großer Entfernung bewegende Zielobjekt gerichtet, auf welchem er den Strahlungsfleck erzeugt. Ziel ist die Zerstörung oder Beschädigung des Zielobjekts mittels des Hochenergielaserstrahls.

### HINTERGRUND DER ERFINDUNG

Die Ausbreitung von Hochenergielaserstrahlen in der Atmosphäre unterliegt turbulenten Störungen, die durch Temperaturschwankungen und damit leichten Schwankungen des Brechungsindex der Luft hervorgerufen werden und zeitlich variieren. Diese Störungen resultieren in einer örtlichen Ablenkung des Hochenergielaserstrahls (der sogenannte Tip/Tilt Anteil) sowie einer zusätzlichen nichtlinearen Veränderung des Strahlprofils. Die Wirkung des Hochenergielaserstrahls auf dem Ziel wird verschlechtert, wenn der Strahlungsfleck nicht konstant an derselben Stelle des Zielobjekts verbleibt (auch wenn dieses sich bewegt), sondern wenn er auf dem Zielobjekt wandert. Soll die Leistung des Hochenergielasers (HEL) auf dem Zielobjekt maximiert werden, so ist es erforderlich, die turbulenten Störungen zu kennen und zu kompensieren. Dazu ist zunächst das Zielobjekt zu beobachten, wozu üblicherweise eine Bilderfassungseinrichtung vorgesehen ist, die vom Zielobjekt ausgesandtes oder reflektiertes Licht erfasst.

Bei ausgedehnten Zielen führen folgende Effekte zu einer Beeinträchtigung des von der Bilderfassung aufgenommenen Zielobjektbildes und somit zu einer möglichen Verschlechterung der Stabilisierung des Strahlungsflecks auf dem Zielobjekt:
- Inhomogene zeitliche Variation der von der Bilderfassungseinrichtung beobachteten Oberflächenhelligkeit des Zielobjekts, z.B. wandernde Glints, inhomogene Beleuchtung, Abschattungen, Turbulenzeffekte etc.;
- Bei Beleuchtung des Zieles mit einem Beleuchtungslaser können zusätzliche Speckle-Effekte und Inhomogenitäten der Oberflächenhelligkeit auftreten;
- Starke Verschmierungen der Zielkonturen, z.B. durch Turbulenzen, inhomogene Beleuchtungssituationen des Zieles oder Speckle-Effekte.

Des Weiteren unterliegt die Turbulenz in der Luft, die der Hochenergielaserstrahl auf seinem Weg zum Ziel durchdringt, örtlichen Schwankungen, es ist daher für die Beobachtbarkeit der Turbulenz erforderlich diese innerhalb begrenzter Gebiete um den Hochenergielaserstrahl herum zu detektieren. Typischerweise werden zur Beurteilung der lokal geeigneten Gebiete der Friedparameter *r₀* bzw. der isoplanatische Winkel Θ₀ herangezogen. Sie beschreiben Orts- bzw. Winkelbereiche, außerhalb derer man von einer signifikant veränderten Turbulenz sprechen kann.

### STAND DER TECHNIK

Es sind herkömmliche Konzepte zur Detektion der Turbulenz bekannt, so zum Beispiel bei der Detektion des Tip-Tilt-Anteils die Verwendung von Guidestars in der Astronomie oder von Tip-Tilt-Laserspots in Zusammenhang mit Hochenergielasern. Zur Detektion von höheren Moden der Turbulenz finden so genannte adaptive Optiken Anwendung. Die Vorrichtungen zur Turbulenzdetektion nach diesen bekannten Verfahren benötigen jeweils zusätzliche Sensoren und/oder Sender.

Im Bereich der Bildverarbeitung sind verbreitete Verfahren die Schwerpunktsmessung der Abbildung des Zielobjekts im von der Bilderfassungseinrichtung erfassten Bild oder alternativ durch Auswertung eines Vier-Quadranten-Detektors.

Der Nachteil dabei ist, dass die zeitlichen Variationen der Oberflächenhelligkeit als virtuelle turbulente Tip/Tilt-Bewegung interpretiert werden und ein zusätzliches Rauschen erzeugen, welches die Stabilisierung des Strahlungsflecks auf dem Zielobjekt deutlich verschlechtert. Auch Bildverschmierungen führen zu einem zusätzlichen Rauschen.

Alternative Methoden, zum Beispiel Korrelationsverfahren, sind ebenfalls sensibel gegen starke Schwankungen der Oberflächenhelligkeit. Konturtrackingverfahren sind weniger sensitiv gegenüber Helligkeitsschwankungen der Zieloberfläche, erzeugen aber bei Konturverschmierungen des Zieles im von der Bilderfassungseinrichtung erfassten Bild deutliches Zusatzrauschen. In der Literatur veröffentlichte statistische Verfahren versuchen, die turbulente Bildverschlechterung zu schätzen, lösen aber das Problem der zeitlichen Variation der Oberflächenhelligkeit nicht.

Ferner offenbart die US 7 405 834 B1 ein Bildgebungsverfahren und ein damit verbundenes System zur Erzeugung von hochauflösenden Bildern. Weiter ist in der US 2010/0282942 A1 ein Strahlungslenkungs-Untersystem offenbart, welches eine Hochenergielaserquelle aufweist. In dem Auszug aus "Bayesian statistical approaches to tracking through turbulences" von Fitzpatrick, American Control Conference 2004, Proceedings of the 2004 Boston, MA; USA June 30 - July 2, 2004, Piscataway, NJ, USA IEEE, 30. Juni 2004, Seite 1499, wird die Anwendung von bayesserschen Statistikverfahren bei optischen Trackingsystemen beschrieben. Des Weiteren wird in der US 2012/292481 A1 ein bildgebendes System beschrieben, welches einen Laser-Sender aufweist, der ausgebildet ist, Licht in Form einer Vielzahl von Teilstrahlen auf ein Ziel abzugeben. In der US 2009/097508 A1 wird wiederum eine Faserlaseranordnung beschrieben, welche eine Vielzahl von kontinuierlich arbeitenden kohärenten, individuellen Faserlasern aufweist. Außerdem wird in der US 2011/103410 A1 ein Laserstrahlkontrollsystem beschrieben, welches eine Auslassblende aufweist, durch welche ein Laserstrahl auf ein Ziel gerichtet wird.

### DARSTELLUNG DER ERFINDUNG

Aufgabe der vorliegenden Erfindung ist es daher, ein Verfahren und eine Vorrichtung zur Stabilisierung eines Strahlungsflecks auf einem entfernten Zielobjekt anzugeben, so dass eine schnelle Zerstörung des Zielobjekts mittels Hochenergielaserstrahlen ermöglicht ist.

Der auf das Verfahren gerichtete Teil der Aufgabe wird gelöst durch das Verfahren zur Stabilisierung eines Strahlungsflecks auf einem entfernten Zielobjekt mit den Merkmalen des Anspruchs 1.

Dieses erfindungsgemäße Verfahren zur lokalen Stabilisierung eines Strahlungsflecks auf einem entfernten Zielobjekt, bei welchem der Strahlungsfleck von einem Hochenergielaserstrahl gebildet wird, der von einem Hochenergiestrahler auf das Zielobjekt gerichtet wird, und bei welchem das Zielobjekt von einem Beleuchtungsstrahl beleuchtet wird, der von einer Beleuchtungseinrichtung auf das Zielobjekt gerichtet wird, zeichnet sich dadurch aus, dass eine von dem vom Beleuchtungsstrahl beleuchteten Zielobjekt reflektierte Strahlung von einer Bilderfassungseinrichtung empfangen wird, dass die vom Zielobjekt zur Bilderfassungseinrichtung reflektierte Strahlung durch denselben optischen Pfad läuft wie der Hochenergielaserstrahl, dass das von der Bilderfassungseinrichtung erfasste Bild des beleuchteten Zielobjekts oder eines Teils des Zielobjekts analysiert und mit zumindest einem zu einem zurückliegenden Zeitpunkt erzeugten Bild des beleuchteten Zielobjekts oder eines Teils des Zielobjekts oder mit einem in einer Objektdatenbank gespeicherten Bild verglichen wird, wobei die Analyse des erfassten Bildes mittels zumindest eines Image-Warping-Verfahrens erfolgt, wozu ein Template-Bild verwendet wird und dass ausgehend von diesem Vergleich ein Korrektursignal bestimmt wird, mit dem eine in dem vom Hochenergielaserstrahl und von der reflektierten Strahlung gemeinsam durchlaufenden optischen Pfad angeordnete optische Korrektureinrichtung beaufschlagt wird, wobei aufgrund des Vergleichs der zu unterschiedlichen Zeitpunkten erfassten oder erzeugten Bilder des beleuchteten Zielobjekts (Z) oder eines Teils des beleuchteten Zielobjekts eine Prognose für eine künftige Bildstörung getroffen wird und wobei die Bestimmung des Korrektursignals unter Berücksichtigung der prognostizierten Bildstörung erfolgt.

Das in einer Objektdatenbank gespeicherte Bild kann auch ein synthetisches Bild oder ein auf bestimmte Bildelemente (zum Beispiel auf Kanten) reduziertes Bild sein. Der Vergleich des erfassten Bildes mit einem in einer Objektdatenbank gespeicherten Bild kann insbesondere dann vorteilhaft sein, wenn kein zu einem zurückliegenden Zeitpunkt erfasstes Bild vorliegt oder dieses vorher erfasste Bild für einen Vergleich nicht geeignet ist. Es kann auch sinnvoll sein, eine Mehrzahl von in der Objektdatenbank gespeicherten Bildern unterschiedlicher Objekte mit dem erfassten Bild zu vergleichen um dadurch zunächst das Zielobjekt zu identifizieren.

### VORTEILE

Da das vom Zielobjekt zur Bilderfassungseinrichtung zurücklaufende Licht dieselbe turbulente Atmosphäre wie der Hochenergielaserstrahl (zumindest im Umkreis des Friedparameters *r₀*) erfährt, kann das durch das vom Zielobjekt zum Hochenergiestrahler zurücklaufende Licht auf der Bilderfassungseinrichtung erzeugte Bild als Indikator für die von der Turbulenz erzeugten Störungen des vom Hochenergielaserstrahls erzeugten Strahlungsflecks auf dem Zielobjekt herangezogen werden. Das Abbild des Zielobjekts auf der Bilderfassungseinrichtung erfährt also in der Nähe des Hochenergielaserspots (also des Strahlungsflecks) ähnliche turbulente Störungen wie der Strahlungsfleck selber. Das erfindungsgemäße Verfahren ermöglicht folglich eine Turbulenzschätzung ohne eine apparativ aufwändige Wellenfrontmessung durchführen zu müssen.

Die Turbulenzschätzung und die daraufhin zumindest teilweise durchgeführte Kompensation der Turbulenzauswirkungen auf den Hochenergielaserstrahl und den von ihm auf dem Zielobjekt gebildeten Strahlungsfleck erfolgen auf Grundlage der konsekutiv von der Bilderfassungseinrichtung aufgenommenen Bilder, vorzugsweise Hochgeschwindigkeitskamerabilder, des Zielobjekts. Die Unterschiede, die sich durch unterschiedliche Wellenlängen des Hochenergielaserstrahls und des zurücklaufenden Lichts ergeben, sind hierbei nicht signifikant.

Die Kernidee der Erfindung besteht somit darin, die zeitliche Veränderung des Abbildes des vom Beleuchtungsstrahl beleuchteten Zielobjekts oder Teils des Zielobjekts, der möglichst an demselben Ort auf dem Zielobjekt liegt, an dem der Hochenergielaser-Strahlungsfleck liegt, oder zumindest in dessen unmittelbarer Umgebung, auf der Bilderfassungseinrichtung als Messgröße oder Indikator für die Veränderung des auf dem Zielobjekt gebildeten Hochenergielaser-Strahlungsflecks selbst heranzuziehen.

Es erfolgt somit durch Anwendung des erfindungsgemäßen Verfahrens eine Wirkleistungserhöhung am Ort des Strahlungsflecks auf dem Zielobjekt durch Kompensation der Turbulenzeffekte ohne das Erfordernis eines großen apparativen Aufwands.

Weitere bevorzugte und vorteilhafte Weiterbildungsmerkmale des erfindungsgemäßen Verfahrens sind Gegenstand der Unteransprüche 2 bis 5.

Besonders von Vorteil ist es, wenn der Beleuchtungsstrahl eine vom Hochenergielaserstrahl abweichende Wellenlänge aufweist.

Vorteilhaft ist es, dass aufgrund des Vergleichs der zu unterschiedlichen Zeitpunkten erfassten oder erzeugten Bilder des beleuchteten Zielobjekts oder eines Teils des beleuchteten Zielobjekts die Prognose für eine künftige Bildstörung getroffen wird und wenn die Bestimmung des Korrektursignals unter Berücksichtigung der prognostizierten Bildstörung erfolgt.

Die Analyse des erfassten Bildes erfolgt mittels zumindest eines Image-Warping-Verfahrens. Es wird ein gewarptes Template-Bild des Bildes erzeugt. Dadurch ist es möglich, im gewarpten Template-Bild des erfassten Bildes das Bild von einem anderen Blickpunkt zu betrachten. Zur Analyse des Bildes mittels eines Image-Warping-Verfahrens wird ein Template-Bild des Zielobjektes verwendet.

Ein Abgleich des erfassten Bildes mit dem gewarpten Template-Bild ermöglicht Rückschlüsse auf die Turbulenzeffekte. Durch Warping-Verfahren, wie zum Beispiel das Lukas-Kanade-Verfahren [Lucas, B. D., Kanade, T.: An Iterative Image Registration Technique with an Application to Stereo Vision, Proceedings of Imaging understanding workshop, pp 121-130, 1981], können zum Beispiel Translationen, Rotationen wie auch Skalierungen ausgehend von einem Template-Bild robust bestimmt werden. Die Art und Anzahl der zugelassenen Bewegungen und Transformationen (Warping-Parameter) kann dabei je nach Problemstellung variieren, so können auch projektive Phänomene berücksichtigt werden.

Vorzugsweise wird die quadratische Pixel-Abweichung zwischen dem erfassten Bild und dem gewarpten Template-Bild minimiert. Dadurch wird das Ziel erreicht, die summierte quadratische Pixel-Abweichung zwischen dem gewarptem Template-Bild und dem aufgenommenem Bild zu minimieren. Diese Übereinstimmung (Matching) über alle Pixel des Template-Bilds (und nicht nur über einzelne Features wie zum Beispiel Kanten) sorgt für insensitives Verhalten gegen Variation der Oberflächenhelligkeit (wie z.B. Störung durch Speckle) und Verschmierung der Konturen. Das Template-Bild kann lernend ausgebildet sein.

Vorzugsweise erfolgt die Prognose für eine künftige Bildstörung auf der Grundlage der Analyse nur eines Teils des erfassten Bildes.

Es ist im Rahmen einer weiteren Ausgestaltung des erfindungsgemäßen Verfahrens möglich, dass in der Zielfunktion nicht alle Pixel-Abweichungen gleichgewertet betrachtet werden, die Pixel also unterschiedlich gewichtet werden.

Vorteilhaft ist dabei, in einem mehrstufigen Verfahren zunächst ein größeres Template-Bild für die Detektion des gesamten Zielobjekts im von der

Bilderfassungseinrichtung erfassten Bild und nachgelagert ein Sub-Template mit einem Bildausschnitt zur Schätzung der lokalen Turbulenz zu verwenden.

Die Template-Bilder können sowohl modellbasiert in einer Datenbank vorgehalten werden als auch adaptiv lernend aus Bildern der Hochgeschwindigkeitskamera extrahiert und im Laufe des Schätzprozesses immer wieder adaptiert werden.

Vorteilhaft ist es ferner, wenn der von der Beleuchtungseinrichtung ausgesandte Beleuchtungsstrahl ein Laserstrahl ist.

Der auf die Vorrichtung gerichtete Teil der Aufgabe wird gelöst durch eine Vorrichtung mit den Merkmalen des Anspruchs 6.

Diese erfindungsgemäße Vorrichtung zur lokalen Stabilisierung eines Strahlungsflecks auf einem entfernten Zielobjekt gemäß dem erfindungsgemäßen Verfahren zeichnet sich aus durch eine Beleuchtungseinrichtung zur Aussendung eines Beleuchtungsstrahls auf ein Zielobjekt, einen Hochenergielaser zur Aussendung eines Hochenergielaserstrahls auf das Zielobjekt, eine optische Korrektureinrichtung, die im optischen Pfad des Hochenergielaserstrahls vorgesehen ist und die von einer Regeleinrichtung ansteuerbar ist, eine Strahlungs-Auskoppelungseinrichtung, die im optischen Pfad des Hochenergielaserstrahls vorgesehen ist und die ausgebildet ist, um eine als Reflexion des Beleuchtungsstrahls empfangene Strahlung aus diesem optischen Pfad auszukoppeln und auf eine Bilderfassungseinrichtung zu leiten, und eine Bildverarbeitungseinrichtung, die zur Übertragung eines Bildsignals von der Bilderfassungseinrichtung mit dieser verbunden ist und die mit der Regeleinrichtung versehen ist, welche zur Erzeugung eines Korrektursignals ausgestaltet und zur Übertragung des Korrektursignals mit einer Steuerungseinrichtung für die optische Korrektureinrichtung verbunden ist.

Diese Vorrichtung ermöglicht es, ohne größeren apparativen Aufwand wie er beispielsweise bei der Verwendung eines Wellenfrontsensors erforderlich wäre, die künftigen Turbulenzeinflüsse auf den Hochenergielaserstrahl vorab zu schätzen und zu kompensieren.

Weitere bevorzugte und vorteilhafte Ausgestaltungsmerkmale der erfindungsgemäßen Vorrichtung sind Gegenstand der Unteransprüche 7 und 8.

Dabei ist es von Vorteil, wenn die Bilderfassungseinrichtung von einer Hochgeschwindigkeitskamera gebildet ist oder eine solche aufweist. Dies ermöglicht eine besonders genaue Analyse der Turbulenzeinflüsse auf die empfangene Strahlung und damit eine genauere Prognose der Auswirkungen auf den Hochenergielaserstrahl.

In einer anderen vorteilhaften Weiterbildung ist die optische Korrektureinrichtung von einem Tip/Tilt-Spiegel gebildet oder weist einen solchen auf. Alternativ ist die Ansteuerung eines deformierbaren Spiegels zur Kompensation höherer Moden möglich.

Insgesamt erhält man den Vorteil der Maximierung der Laserenergie im auf dem Zielobjekt gebildeten Strahlungsfleck und damit eine deutliche Reduzierung der Bestrahlzeit ohne Verwendung eines Wellenfrontsensors oder Guidestars.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: einen schematischen Aufbau einer erfindungsgemäßen Vorrichtung zur lokalen Stabilisierung eines Strahlungsflecks auf einem entfernten Zielobjekt,
- Fig. 2: ein Messprotokoll der die tatsächliche Ablage des vom Hochenergielaser auf dem Zielobjekt gebildeten Strahlungsflecks und die mittels des Bildverarbeitungsverfahrens berechnete Ablage und
- Fig. 3: die Korrelation der Ablagen aus Fig. 2.

### DARSTELLUNG VON BEVORZUGTEN AUSFÜHRUNGSBEISPIELEN

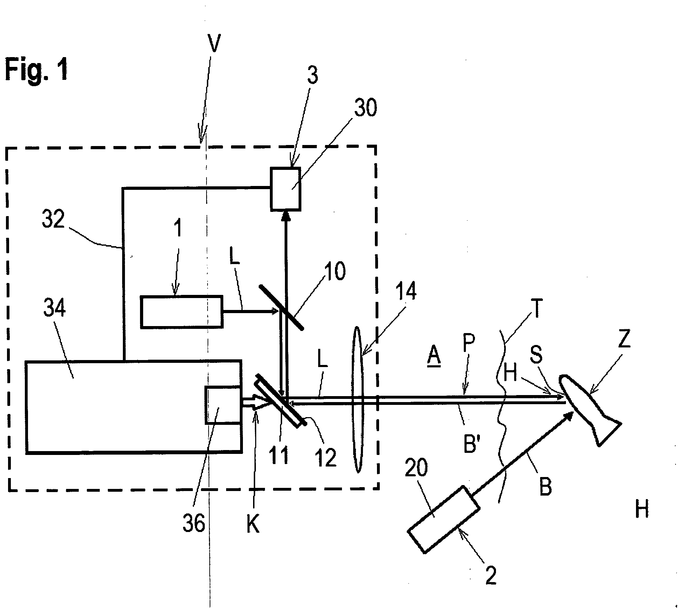

In Fig. 1 ist eine erfindungsgemäße Vorrichtung zur lokalen Stabilisierung eines Strahlungsflecks auf einem entfernten Zielobjekt schematisch dargestellt. Diese Vorrichtung weist einen Hochenergiestrahler 1 auf, der einen Hochenergielaserstrahl L aussendet. Dieser Hochenergielaserstrahl L trifft auf einen ersten Umlenkspiegel 10 und wird von dort auf einen zweiten Umlenkspiegel 12 weitergeleitet. Der erste Umlenkspiegel 10 ist als dichroitischer Spiegel ausgebildet, um die Strahlungsleistung des Hochenergielaserstrahls von einem auf demselben optischen Pfad empfangenen Bild zu entkoppeln. Der zweite Spiegel 12 ist ein Tip/Tilt-Spiegel, dessen Winkel variabel ist und von einer Regeleinrichtung kommandiert wird.

Der am zweiten Umlenkspiegel reflektierte Hochenergielaserstrahl L tritt dann durch eine beispielsweise als Teleskop ausgebildete Fokussiereinrichtung 14 hindurch und trifft auf die Außenhaut des weit entfernt gelegenen und/oder sich bewegenden Zielobjekts Z, das im gezeigten Beispiel von einem Flugkörper gebildet ist. Der Hochenergielaserstrahl L erzeugt so auf der Außenhaut des Zielobjekts Z einen Strahlungsfleck S. An diesem Strahlungsfleck S wird durch Einwirkung des Hochenergielaserstrahls L die Außenhaut des Zielobjekts Z derart erwärmt, dass die Struktur an dieser Stelle geschwächt und das Zielobjekt Z dadurch zerstört oder geschädigt wird. Ein typischer Anwendungsfall ist die Bekämpfung von Flugkörper-Waffen.

Der Hochenergielaserstrahl L durchläuft auf seinem Weg von der Vorrichtung V zum Zielobjekt Z die Atmosphäre A, in der Turbulenzen T auftreten, die in Fig. 1 schematisch als Wellenlinie dargestellt sind. Diese Turbulenzen bewirken, dass der Strahlungsfleck S auf dem Zielobjekt Z nicht ortsfest ist, sondern geringfügig bezüglich des von einer Zieleinrichtung anvisierten Haltepunkts H auf dem Zielobjekt Z in Ablage gerät. Das hat zur Folge, dass die lokal an der Außenhaut des Zielobjekts Z aufgebrachte Strahlungsenergie während der Bestrahlung nicht konstant bleibt, wodurch die Bestrahlungswirkung suboptimal ist. Die erforderliche Temperatur auf der Außenhaut des Zielobjekts Z, um die Außenhaut zu erweichen oder aufzuschmelzen, wird daher nur nach längerer Bestrahlungszeit und/oder nur unter Einsatz einer höheren Strahlungsenergie erreicht. Um dieses Ziel auch bei geringerer Strahlungsenergie und kürzerer Bestrahlungszeit zu erreichen, gilt es, den Strahlungsfleck S auf der Außenhaut des Zielobjekts Z lokal zu stabilisieren. Neben den üblichen Verfahren zur Zielverfolgung, die den Strahlungsfleck S auch bei einem bewegten Zielobjekt Z im wesentlichen punktgenau nachführen, ist das Problem der turbulenzbedingten Zielpunktablage des Hochenergielaserstrahls L zu lösen.

Dazu wird das Zielobjekt Z aus im Wesentlichen ebenso großer Entfernung wie die Entfernung zwischen der Vorrichtung V und dem Zielobjekt Z mittels einer Beleuchtungseinrichtung 2, die beispielsweise von einem Beleuchtungslaser 20 gebildet ist, beleuchtet. Der vom Beleuchtungslaser 20 ausgehende Beleuchtungsstrahl B weist üblicherweise eine vom Hochenergielaserstrahl L abweichende Wellenlänge auf. Der Beleuchtungslaser 20 ist divergent und beleuchtet das gesamte Zielobjekt oder zumindest ausgedehnte Bereiche des Zielobjekts Z.

Der Beleuchtungsstrahl B legt von der Beleuchtungseinrichtung 2 zum Ziel Z ebenfalls eine große Entfernung zurück und trifft auf das Zielobjekt Z und zwar ebenfalls auf die Außenhaut zumindest im Bereich des Strahlungsflecks S. Von dort wird die an der Außenhaut des Zielobjekts Z reflektierte Beleuchtungsstrahlung B' auf demselben optischen Pfad P zur Vorrichtung V geleitet, den der Hochenergielaserstrahl L von der Vorrichtung V zum Ziel Z nimmt. Das bedeutet, dass der reflektierte Beleuchtungsstrahl B' ebenfalls durch die Atmosphäre A und deren Turbulenzen T hindurch läuft und daher dieselben optischen Abweichungen erfährt, wie der zum selben Zeitpunkt durch die Turbulenzen T hindurchtretende Hochenergielaserstrahl L.

Der reflektierte Beleuchtungsstrahl B' tritt vom Zielobjekt Z kommend durch die Fokussiereinrichtung 14 hindurch und trifft auf den zweiten Umlenkspiegel 12, von dem er in Richtung auf den ersten Umlenkspiegel 10 abgelenkt wird.

Dieser erste Umlenkspiegel 10 ist für die Wellenlänge des Beleuchtungsstrahls B durchlässig, sodass er eine Strahlungs-Auskoppelungseinrichtung bildet, die den vom Zielobjekt Z reflektierten Beleuchtungsstrahl B' nicht ablenkt, sondern hindurchläßt. Der durch den ersten Umlenkspiegel 10 hindurchtretende reflektierte Beleuchtungsstrahl B' trifft dann auf eine Bilderfassungseinrichtung 3, die beispielsweise von einer Hochgeschwindigkeitskamera 30 gebildet ist. Die Bilderfassungseinrichtung 3 erfasst ein Abbild eines Teilbereichs des Zielobjekts Z oder sogar das gesamte Zielobjekt Z.

Das in der Bilderfassungseinrichtung 3 gewonnene Bildsignal wird über eine Signalleitung 32 zu einer Bildverarbeitungseinrichtung 34 geleitet, die das vom Bildsignal repräsentierte Bild analysiert und mit einem vorher erzeugten Bild vergleicht. Dieses vorher erzeugte Bild kann ein zu einem vorherigen oder früheren Zeitpunkt erfasstes oder synthetisch erzeugtes Bild sein. Aus einer Folge derartiger Vergleiche von hintereinander erzeugten oder von der Bilderfassungseinrichtung 3 erfassten Bildern des vom Beleuchtungsstrahl B auf der Außenhaut des Zielobjekts Z beleuchteten Bereichs, der über die reflektierte Beleuchtungsstrahlung B' wahrgenommen wird, kann die Bildverarbeitungseinrichtung 34 eine Prognose erstellen, welchen optischen Einflüssen der zu diesem Zeitpunkt ausgestrahlte Hochenergielaserstrahl L auf seinem Weg durch die Atmosphäre A unterworfen sein wird. Aus dieser Prognose ermittelt die Bildverarbeitungseinrichtung ein Korrektursignal, welches von einer in der Bildverarbeitungseinrichtung 34 vorgesehenen oder mit dieser verbundenen Regeleinrichtung 36 - symbolisiert durch den offenen Pfeil K - als Steuersignal an eine Steuerungseinrichtung des als Tip/Tilt-Spiegel ausgebildeten zweiten Umlenkspiegels 12 gesandt wird.

Selbstverständlich ist es bei geringfügigen Zugeständnissen an die Genauigkeit auch möglich, das Korrektursignal direkt aus einem Vergleich der Bildsignale der letzten empfangenen Bilder des Beleuchtungspunktes zu ermitteln ohne dass eine Prognose erstellt und diese dann der Korrektur zugrundegelegt wird.

Der zweite Umlenkspiegel 12 bildet so eine optische Korrektureinrichtung und gleicht die auf dem Weg zwischen der Vorrichtung V und dem Zielobjekt Z erwarteten optischen Einflüsse, die im Wesentlichen durch die Turbulenzen T verursacht werden, aus. Auf diese Weise ist ein Fein-Nachführ-Regelkreis gebildet, der die schädlichen Einwirkungen der Turbulenzen T auf den Hochenergielaserstrahl L (und natürlich auch auf den reflektierten Beleuchtungsstrahl B') kompensiert, sodass der vom Laserstrahl L gebildete Strahlungsfleck S auf der Außenhaut des Zielobjekts Z nahezu ortskonstant bleibt.

Bei der in Fig. 1 dargestellten Vorrichtung wird in demselben optischen Kanal oder auf demselben optischen Pfad, den der Hochenergielaser durchläuft, vom Ziel zurückgeworfenes Licht in einer Hochgeschwindigkeitskamera aufgenommen und ausgewertet. Auf dessen Basis wird eine Korrektur des Hochenergie-Laserstrahls mit Hilfe eines zum Beispiel als Piezospiegel ausgebildeten Tip/Tilt-Spiegels als optische Korrektureinrichtung durchgeführt. Obwohl das Zielobjekt im gezeigten Beispiel mittels eines Beleuchtungslasers beleuchtet wird, sind jedoch auch andere Beleuchtungsformen bis hin zur Auswertung der Rückstrahlung aufgrund der Sonneneinstrahlung nutzbar.

Kernpunkt des als Beispiel gezeigten und beschriebenen erfindungsgemäßen Verfahrens ist der Abgleich eines sogenannten Template-Bildes eines Objektes (des Zielobjekts oder eines Teils des Zielobjekts) mit dem augenblicklich von der Bilderfassungseinrichtung 2 erfassten Bild (im Folgenden als Feintracking-Bild bezeichnet). Ziel ist es, die Parameter einer Transformation zu bestimmen, die das Template-Bild optimal im Sinne eines bestimmten Gütemaßes auf das augenblickliche Feintracking-Bild abbildet. Hierzu kann beispielsweise die minimale quadratische Fehlersumme der Pixelabweichungen verwendet werden. An dieser Stelle ist es auch möglich, den Einfluss bestimmter Parameter der Transformation in dem Fehlermaß unterschiedlich bzw. bestimmte Pixelabweichungen stärker oder schwächer zu gewichten. Auch eine hierarchische Optimierung, in welcher die Komponenten einer Transformationen (z.B. Rotation, Translation) nacheinander optimiert werden, ist denkbar. Die Transformation selbst wird dabei als "Warping" bezeichnet und die Parameter der Transformation werden als Warping-Parameter bezeichnet.

Die Transformation kann verschiedene Freiheitsgrade zulassen: In der Regel werden Rotation, Translation, Streckung bzw. Stauchung und Scherung des Template-Bildes zugelassen. In dem Fall müssen sechs Warping-Parameter bestimmt werden. Aber auch projektive oder andere Transformationen sind denkbar. In diesem Fall kann die Anzahl der Warping-Parameter variieren. Für die Anwendung hat sich jedoch der Weg einer Reduktion der Warping-Parameter als nützlich erwiesen. Je nach Begegnungsgeometrie und Zieltrajektorie treten bestimmte Effekte wie Scherung oder Stauchung nicht auf, so dass die Verwendung von weniger Warping-Parametern (beispielsweise drei oder fünf) nützlich sein kann.

Ist der Haltepunkt (der anvisierte Punkt auf dem Zielobjekt Z, den der Hochenergielaserstrahl L treffen soll) im Template-Bild definiert, so kann er unter Verwendung der ermittelten Transformationsvorschrift in das aktuelle Bild transformiert werden und es kann direkt die Ablage ermittelt werden, auf deren Basis die Regeleinrichtung 36 das Korrektursignal berechnet.

Vorzugsweise werden die Warping-Parameter auch zur Berechnung von Korrektursignalen zur Ansteuerung eines verformbaren Spiegels zur Kompensation höherer Moden (korrespondierend mit einer Verformung des vom Hochenergielaser gebildeten Strahlungsflecks) verwendet.

Das Template-Bild selbst kann ein generisches Bild des Zielobjekts Z sein, welches vorgefertigt ist und in einem Speicher der Bildverarbeitungseinrichtung 34 abgespeichert bereitgestellt wird. Alternativ kann das Template-Bild ein anhand einer anfänglich (vor Einleiten der Bekämpfung durch Aktivierung des Hochenergielasers) von der Bilderfassungseinrichtung 3 aufgenommenen Bildsequenz generiertes Bild sein. Schließlich kann das Template-Bild alternativ auch durch eine von einem Bediener vorgenommene Auswahl eines Ausschnitts des Feintracking-Bilds gebildet werden. Welche dieser alternativen Methoden eingesetzt wird, hängt beispielsweise vom Zielobjekt-Typ ab. Bei sich schnell bewegenden Zielobjekten muss die Wahl automatisch erfolgen, bei langsamen Zielobjekten ist die Vorgabe durch den Bediener sinnvoll. Gleiches gilt für die Wahl des Haltepunkts, der automatisiert oder durch den Bediener vorgegeben werden kann.

Im Zuge des Bekämpfungsvorgangs kann sich, beispielsweise durch ein Flugmanöver des Zielobjekts, die Ansicht des Objektes grundlegend ändern, so dass das zugrunde liegende Template-Bild der Situation nicht mehr gerecht wird. Um diesem Effekt zu begegnen, kann das Template-Bild mit Hilfe von Information aus dem Feintracking-Bild modifiziert werden, das Template ist dann lernend ausgelegt. Der Anteil an Information, der aus dem aktuellen Feintracking-Bild zur Modifikation des Templates herangezogen wird, kann dabei begrenzt werden ("Lernrate").

Da das Template-Bild im Allgemeinen weniger Pixel beinhaltet als das von der Bilderfassungseinrichtung erfasste Bild und der Berechnungsaufwand und somit auch die benötigte Rechenzeit mit der Anzahl der Pixel ansteigt, wird vorzugsweise das Template "gewarpt", das heißt einer Transformation unterworfen. Da das Warping im Zuge der Optimierung in jedem Iterationsschritt erfolgen muss, reduziert dies den Rechenaufwand deutlich. Prinzipiell ist jedoch auch der umgekehrte Weg denkbar. Zusätzlich kann Aufwand eingespart werden, indem die Pixelauflösung des Template-Bildes reduziert wird.

Unter dem Aspekt der Korrektur von Turbulenzeinflüssen ist ein räumlich begrenzter Bereich (charakterisiert durch den Fried-Radius *r₀*) um den Haltepunkt auf dem Zielobjekt entscheidend. Ist das Zielobjekt groß im Vergleich zu diesem Bereich, kann es sinnvoll sein, ein sogenanntes Sub-Template zu verwenden, welches ausschließlich diesen Bereich des Zielobjekts beinhaltet. In diesem Fall wird das Template-Bild zur Ermittlung einer Grobausrichtung verwendet (primär zur Korrektur der Bewegung des Ziels). Anschließend wird und unter Verwendung des Sub-Templates noch eine Detailausrichtung (primär zur Korrektur der Bewegung aufgrund von Turbulenzen) ermittelt. Die Wahl des Sub-Templates kann, wie schon die Template-Wahl, wiederum auf verschiedene Weise erfolgen. Besonders sinnvoll erscheint die automatisierte Wahl eines Bereichs um den vorgegebenen Haltepunkt, dessen Größe abhängig von *r₀* gewählt wird.

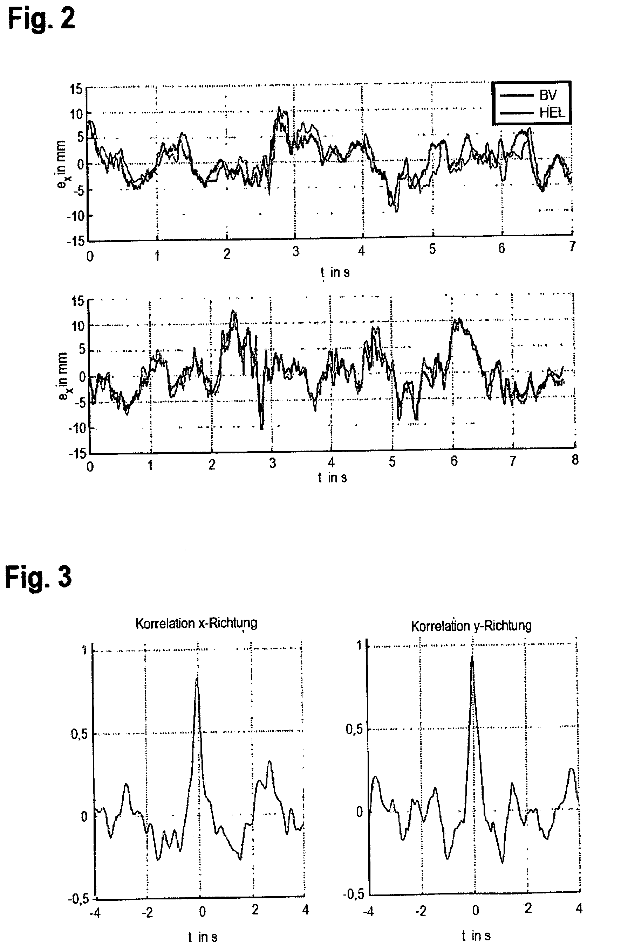

Die beschriebene Vorrichtung fertigt Aufnahmen des Zielobjekts an, auf deren Grundlage mit Hilfe der Warping-Verfahren ein Haltepunkt bestimmt wird. Zeitgleich wird in demselben optischen Kanal oder auf demselben optischen Pfad, durch den das Licht für die Aufnahmen empfangen wird, ein Hochenergielaserfleck auf das Ziel gestrahlt. Die Ablagen vom Haltepunkt (bestimmt aus dem Warping-Verfahren) und dem Schwerpunkt des Hochenergielaserflecks sind in Fig 2 zu sehen. Dort zeigt die hellere Linie (BV) die Ablage des Haltepunkts H des Warpingverfahrens und die dunklere Linie (HEL) die Ablage des Hochenergielaserstrahl-Schwerpunktes, jeweils von der Bildmitte.

Fig. 3 zeigt die Korrelation der Ablagen, also der beiden Verläufe, aus Fig. 2 in x-Richtung und in y-Richtung und bestätigt damit die Funktionsfähigkeit des erfindungsgemäßen Ansatzes zur Turbulenzschätzung und damit die daraufhin durchgeführte Turbulenzfehlerkompensation.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Hochenergiestrahler
- 2: Beleuchtungseinrichtung
- 3: Bilderfassungseinrichtung
- 10: erster Umlenkspiegel (Strahlungs-Auskoppelungseinrichtung)
- 11: Steuerungseinrichtung
- 12: zweiter Umlenkspiegel (optische Korrektureinrichtung)
- 14: Fokussiereinrichtung
- 20: Beleuchtungslaser
- 30: Hochgeschwindigkeitskamera
- 32: Signalleitung
- 34: Bildverarbeitungseinrichtung
- 36: Regeleinrichtung

- A: Atmosphäre
- B: Beleuchtungsstrahl
- B': reflektierte Beleuchtungsstrahlung
- H: Haltepunkt
- K: Korrektursignal
- L: Hochenergielaserstrahl
- P: optischer Pfad
- S: Strahlungsfleck
- T: Turbulenzen
- V: Vorrichtung
- Z: Zielobjekt

## Patentansprüche

1. Verfahren zur lokalen Stabilisierung eines Strahlungsflecks (S) auf einem entfernten Zielobjekt (Z), wobei der Strahlungsfleck (S) von einem Hochenergielaserstrahl (L) gebildet wird, der von einem Hochenergiestrahler (1) auf das Zielobjekt (Z) gerichtet wird, und wobei das Zielobjekt (Z) von einem Beleuchtungsstrahl (B) beleuchtet wird, der von einer Beleuchtungseinrichtung (2) auf das Zielobjekt (Z) gerichtet wird; **dadurch gekennzeichnet,**
- **dass** eine von dem vom Beleuchtungsstrahl (B) beleuchteten Zielobjekt (Z) reflektierte Strahlung (B') von einer Bilderfassungseinrichtung (3) empfangen wird;
- **dass** die vom Zielobjekt (Z) zur Bilderfassungseinrichtung (3) reflektierte Strahlung (B') durch denselben optischen Pfad (P) läuft wie der Hochenergielaserstrahl (L);
- **dass** das von der Bilderfassungseinrichtung (3) erfasste Bild des beleuchteten Zielobjekts (Z) oder eines Teils des beleuchteten Zielobjekts analysiert und mit zumindest einem zu einem zurückliegenden Zeitpunkt erzeugten Bild des beleuchteten Zielobjekts (Z) oder eines Teils des beleuchteten Zielobjekts oder mit einem in einer Objektdatenbank gespeicherten Bild verglichen wird, wobei die Analyse des erfassten Bildes mittels zumindest eines Image-Warping-Verfahrens erfolgt, wozu ein Template-Bild verwendet wird;
- **dass** ausgehend von diesem Vergleich ein Korrektursignal bestimmt wird, mit dem eine in dem vom Hochenergielaserstrahl (L) und von der reflektierten Strahlung (B') gemeinsam durchlaufenden optischen Pfad (P) angeordnete optische Korrektureinrichtung (12) beaufschlagt wird,
wobei aufgrund des Vergleichs der zu unterschiedlichen Zeitpunkten erfassten oder erzeugten Bilder des beleuchteten Zielobjekts (Z) oder eines Teils des beleuchteten Zielobjekts eine Prognose für eine künftige Bildstörung getroffen wird und
wobei die Bestimmung des Korrektursignals unter Berücksichtigung der prognostizierten Bildstörung erfolgt.

2. Verfahren nach Anspruch 1,
**dadurch gekennzeichnet,**
**dass** der Beleuchtungsstrahl (B) eine vom Hochenergielaserstrahl (L) abweichende Wellenlänge aufweist.

3. Verfahren nach einem der vorhergehenden Ansprüche,
**dadurch gekennzeichnet,**
**dass** die quadratische Pixel-Abweichung zwischen dem erfassten Bild und dem gewarpten Template-Bild minimiert wird.

4. Verfahren nach einem der vorhergehenden Ansprüche,
**dadurch gekennzeichnet,**
**dass** die Prognose für eine künftige Bildstörung auf der Grundlage der Analyse nur eines Teils des erfassten Bildes erfolgt

5. Verfahren nach einem der vorhergehenden Ansprüche,
**dadurch gekennzeichnet,**
**dass** der von der Beleuchtungseinrichtung (2) ausgesandte Beleuchtungsstrahl (B) ein Laserstrahl ist.

6. Vorrichtung zur lokalen Stabilisierung eines Strahlungsflecks (S) auf einem entfernten Zielobjekt (Z) zur Durchführung eines Verfahrens nach einem der vorhergehenden Ansprüche, **gekennzeichnet durch**
- eine Beleuchtungseinrichtung (2) zur Aussendung eines Beleuchtungsstrahls (B) auf ein Zielobjekt (Z),
- einen Hochenergielaser (1) zur Aussendung eines Hochenergielaserstrahls (L) auf das Zielobjekt (Z),
- eine Bilderfassungseinrichtung (3), welche eine von dem vom Beleuchtungsstrahl (B) beleuchteten Zielobjekt (Z) reflektierte Strahlung (B') empfängt,
- eine optische Korrektureinrichtung (12), die im optischen Pfad (P) des Hochenergielaserstrahls (L) vorgesehen ist und die von einer Regeleinrichtung (36) ansteuerbar ist,
- eine Strahlungs-Auskoppelungseinrichtung (10), die im optischen Pfad (P) des Hochenergielaserstrahls (L) vorgesehen ist und die ausgebildet ist, um eine als Reflexion des Beleuchtungsstrahls (B) empfangene Strahlung (B') aus diesem optischen Pfad (P) auszukoppeln und auf die Bilderfassungseinrichtung (3) zu leiten, wobei die vom Zielobjekt (Z) zur Bilderfassungseinrichtung (3) reflektierte Strahlung (B') **durch** denselben optischen Pfad (P) läuft wie der Hochenergielaserstrahl (L) und
- eine Bildverarbeitungseinrichtung (34), die zur Übertragung eines Bildsignals von der Bilderfassungseinrichtung (3) mit dieser verbunden ist und die mit der Regeleinrichtung (36) versehen ist, welche zur Erzeugung eines Korrektursignals ausgestaltet und zur Übertragung des Korrektursignals (K) mit einer Steuerungseinrichtung (11) für die optische Korrektureinrichtung (12) verbunden ist,
wobei die Bildverarbeitungseinrichtung (34) das von der Bilderfassungseinrichtung (3) erfasste Bild des beleuchteten Zielobjekts (Z) oder eines Teils des beleuchteten Zielobjekts analysiert und mit zumindest einem zu einem zurückliegenden Zeitpunkt erzeugten Bild des beleuchteten Zielobjekts (Z) oder eines Teils des beleuchteten Zielobjekts oder mit einem in einer Objektdatenbank gespeicherten Bild vergleicht, wobei die Analyse des erfassten Bildes mittels zumindest eines Image-Warping-Verfahrens erfolgt, wozu ein Template-Bild verwendet wird,
wobei die Bildverarbeitungseinrichtung (34) ausgehend von diesem Vergleich das Korrektursignal bestimmt, mit dem die in dem vom Hochenergielaserstrahl (L) und von der reflektierten Strahlung (B') gemeinsam durchlaufenden optischen Pfad (P) angeordnete optische Korrektureinrichtung (12) beaufschlagt wird,
wobei die Bildverarbeitungseinrichtung (34) aufgrund des Vergleichs der zu unterschiedlichen Zeitpunkten erfassten oder erzeugten Bilder des beleuchteten Zielobjekts (Z) oder eines Teils des beleuchteten Zielobjekts eine Prognose für eine künftige Bildstörung trifft und wobei die Bestimmung des Korrektursignals unter Berücksichtigung der prognostizierten Bildstörung erfolgt.

7. Vorrichtung nach Anspruch 6,
**dadurch gekennzeichnet,**
**dass** die Bilderfassungseinrichtung (3) von einer Hochgeschwindigkeitskamera gebildet ist oder eine solche aufweist.

8. Vorrichtung nach Anspruch 6 oder 7,
**dadurch gekennzeichnet,**
**dass** die optische Korrektureinrichtung (12) von einem Tip/Tilt-Spiegel gebildet ist oder einen solchen aufweist.

## Claims

1. Method for local stabilisation of a beam spot (S) on a remote target object (Z), the beam dot (S) being formed by a high-energy beam (L) which is directed onto the target object (Z) by a high-energy emitter (1), and the target object (Z) being illuminated by an illuminating beam (B) which is directed onto the target object (Z) by an illumination device (2); **characterised**
- **in that** a beam (B'), reflected from the target object (Z) illuminated by the illuminating beam (B), is received by an image capture device (3);
- **in that** the beam (B'), reflected from the target object (Z) to the image capture device (3), passes through the same optical path (P) as the high-energy laser beam (L) ;
- **in that** the image, captured by the image capture device (3), of the illuminated target object (Z) or of part of the illuminated target object is analysed and compared with at least one image, generated at a previous time, of the illuminated target object (Z) or of part of the illuminated target object or with an image stored in an object database, the analysis of the captured image taking place using at least one image-warping method, for which purpose a template image is used;
- **in that**, on the basis of this comparison, a correction signal is determined, which is applied to an optical correction device (12), which is arranged in the optical path (P) which is jointly passed through by the high energy laser beam (L) and by the reflected beam (B'),
a prediction for a future image interference being reached on the basis of the comparison between the images, captured or produced at different times, of the illuminated target object (Z) or of part of the illuminated target object, and the determination of the correction signal taking into account the predicted image interference.

2. Method according to claim 1,
**characterised**
**in that** the illuminating beam (B) has a different wavelength from the high-energy laser beam (L).

3. Method according to any of the preceding claims,
**characterised**
**in that** the squared pixel deviation between the captured image and the warped template image is minimised.

4. Method according to any of the preceding claims
**characterised**
**in that** the prediction for a further image interference is based on the analysis of only part of the captured image.

5. Method according to any of the preceding claims,
**characterised**
**in that** the illuminating beam (B) emitted from the illumination device (2) is a laser beam.

6. Device for local stabilisation of a beam spot (S) on a remote target object (Z) for carrying out a method according to any of the preceding claims, **characterised by**
- an illumination device (2) for emitting an illuminating beam (B) onto a target object (Z),
- a high-energy laser (1) for emitting a high-energy beam (L) onto the target object (Z),
- an image capture device (3) which receives a beam (B') reflected from the target object (Z) illuminated by the illuminating beam (B),
- an optical correction device (12), which is arranged in the optical path (P) of the high-energy laser beam (L) and which is actuable by a regulation device (36),
- a beam decoupling device (10), which is provided in the optical path (P) of the high-energy laser beam (L) and which is formed to decouple a beam (B'), received as a reflection of the illuminating beam (B), from this optical path (P) and to pass it to an image capture device (3), the beam (B') reflected from the target object (Z) to the image capture device (3) passing through the same optical path (P) as the high-energy laser beam (L), and
- an image processing device (34), which is connected to the image capture device (3) to transmit an image signal thereof and which is provided with the regulation device (36), which is configured to generate a correction signal and to transmit the correction signal (K) using a control device (11) for the optical correction device (12);
the image processing device (34) analysing the image, detected by the image capture device (3), of the illuminated target object (Z) or of part of the illuminated target object and comparing it with at least one image, generated at a previous time, of the illuminated target object (Z) or of part of the illuminated target object or with an image stored in an object database, the analysis of the captured image taking place using at least one image-warping method, for which purpose a template image is used,
the image processing device (34), on the basis of this comparison, determining the correction signal, which is applied to the optical correction device (12), which is arranged in the optical path (P) which is jointly passed through by the high energy laser beam (L) and by the reflected beam (B'),
the image processing device (34) reaching a prediction for a future image interference on the basis of the comparison between the images, captured or produced at different times, of the illuminated target object (Z) or of part of the illuminated target object, and the determination of the correction signal taking into account the predicted image interference.

7. Device according to claim 6,
**characterised**
**in that** the image capture device (3) is formed by or comprises a high-speed camera.

8. Device according to either claim 6 or claim 7,
**characterised**
**in that** the optical correction device (12) is formed by or comprises a tip/tilt mirror.

## Revendications

1. Procédé de stabilisation locale d'une tache de rayonnement (S) sur un objet cible (Z) éloigné, dans lequel la tache de rayonnement (S) est créée par un rayon laser à haute énergie (L), lequel est dirigé depuis un émetteur haute énergie sur l'objet cible (Z), et dans lequel l'objet cible (Z) est illuminé par un faisceau d'éclairage (B), lequel est dirigé depuis un moyen d'éclairage (2) sur l'objet cible (Z) ; **caractérisé en ce**
- **qu'**un rayonnement (B1) réfléchi par l'objet cible (Z) illuminé par le faisceau d'éclairage (B) est reçu par un moyen de capture d'image (3) ;
- **que** le rayonnement (B1) réfléchi par l'objet cible (Z) vers le moyen de capture d'image (3) parcourt le même chemin optique (P) que le rayon laser à haute énergie (L) ;
- **que** l'image de l'objet cible (Z) illuminé ou d'une partie de l'objet cible illuminé capturée par le moyen de capture d'image (3) est analysée et est comparée à au moins une image de l'objet cible (Z) illuminé ou d'une partie de l'objet cible illuminé produite à un instant précédent ou à une image enregistrée dans une banque de données d'objet, dans lequel l'analyse de l'image capturée s'effectue au moins au moyen d'un procédé de distorsion d'image, où une image modèle est utilisée ;
- **qu'**à partir de cette comparaison un signal de correction est calculé, lequel est appliqué à un moyen correcteur optique (12) agencé dans le chemin optique (P) traversé conjointement par le rayon laser à haute énergie (L) et le rayonnement réfléchi (B'),
dans lequel un pronostic pour un bruit d'image futur est posé sur la base de la comparaison des images de l'objet cible (Z) illuminé ou d'une partie de l'objet cible illuminé capturées ou produites à différents instants et
dans lequel le calcul du signal de correction s'effectue en prenant en compte le bruit d'image pronostiqué.

2. Procédé selon la revendication 1,
**caractérisé en ce**
**que** le faisceau d'éclairage (B) comporte une longueur d'onde différente de celle du rayon laser à haute énergie (L).

3. Procédé selon l'une des revendications précédentes,
caractérisé en ce
l'écart quadratique de pixel entre l'image capturée et l'image modèle distordue est minimisé.

4. Procédé selon l'une des revendications précédentes,
**caractérisé en ce**
**que** que le pronostic pour un bruit d'image futur s'effectue sur la base de l'analyse d'une partie seulement de l'image capturée.

5. Procédé selon l'une des revendications précédentes,
**caractérisé en ce**
**que** le faisceau d'éclairage (B) émis par le moyen d'éclairage (2) est un rayon laser.

6. Dispositif de stabilisation locale d'une tache de rayonnement (S) sur un objet cible (Z) éloigné permettant la mise en œuvre d'un procédé selon l'une des revendications précédentes, **caractérisé par**
- un moyen d'éclairage (2) permettant d'émettre un faisceau d'éclairage (B) sur un objet cible (Z),
- un laser à haute énergie (1) permettant d'émettre un faisceau laser à haute énergie (L) sur l'objet cible (Z),
- un moyen de capture d'image (3), lequel reçoit un rayonnement (B1) réfléchi par l'objet cible (Z) illuminé par le faisceau d'éclairage (B),
- un moyen de correction optique (12), lequel est prévu dans le chemin optique du faisceau laser à haute énergie (L) et peut être commandé par un moyen de régulation (36),
- un moyen de découplage de rayonnement (10), lequel est prévu dans le chemin optique du faisceau laser à haute énergie (L) et est réalisé pour découpler de ce chemin optique (P) un rayonnement (B' reçu comme réflexion du faisceau d'éclairage (B) et pour le guider sur un moyen de capture d'image (3), dans lequel le rayonnement (B1) réfléchi par l'objet cible (Z) vers le moyen de capture d'image (3) parcourt le même chemin optique (P) que le rayon laser à haute énergie (L), et
- un moyen de traitement d'image (34), lequel est raccordé au moyen de capture d'image (3) pour la transmission d'un signal d'image de celui-ci et est prévu doté d'un moyen de régulation (36), lequel est configuré pour produire un signal de correction et est raccordé à un moyen de commande (11) pour le moyen de correction (12) pour la transmission du signal de correction (K),
dans lequel le dispositif de traitement d'image (34) analyse l'image de l'objet cible (Z) illuminé ou d'une partie de l'objet cible illuminé capturée par le moyen de capture d'image (3) et la compare à au moins une image de l'objet cible (Z) illuminé ou d'une partie de l'objet cible illuminé produite à un instant précédent ou à une image enregistrée dans une banque de données d'objet, dans lequel l'analyse de l'image capturée s'effectue au moins au moyen d'un procédé de distorsion d'image, où une image modèle est utilisée, dans lequel le dispositif de traitement d'image (34) calcule le signal de correction à partir de cette comparaison, lequel est appliqué au moyen correcteur optique (12) agencé dans le chemin optique (P) traversé conjointement par le rayon laser à haute énergie (L) et le rayonnement réfléchi (Bl),
dans lequel le dispositif de traitement d'image (34) pose un pronostic pour un bruit d'image futur sur la base de la comparaison des images de l'objet cible (Z) illuminé ou d'une partie de l'objet cible illuminé capturées ou produites à différents instants et dans lequel le calcul du signal de correction s'effectue en prenant en compte le bruit d'image pronostiqué.

7. Dispositif selon la revendication 6,
**caractérisé en ce**
**que** le moyen de capture d'image (3) est formé d'une caméra haute vitesse ou comporte une telle caméra.

8. Dispositif selon la revendication 6 ou 7,
**caractérisé en ce**
**que** le moyen correcteur optique (12) est formé d'un miroir de basculement ou comporte un tel miroir.
